Europäisches Patentamt

European Patent Office

Office européen des brevets

(11) Veröffentlichungsnummer : **0 082 534**
**B1**

(12) EUROPÄISCHE PATENTSCHRIFT

(45) Veröffentlichungstag der Patentschrift :
19.08.87

(51) Int. Cl.⁴ : **B 60 K   1/04**, B 60 K   9/00

(21) Anmeldenummer : 82111878.3

(22) Anmeldetag : 21.12.82

(54) Fahrzeug mit batterie-elektrischem Antrieb.

(30) Priorität : 22.12.81 DE 3150861

(43) Veröffentlichungstag der Anmeldung :
29.06.83 Patentblatt 83/26

(45) Bekanntmachung des Hinweises auf die Patenterteilung : 19.08.87 Patentblatt 87/34

(84) Benannte Vertragsstaaten :
AT CH DE FR GB IT LI NL SE

(56) Entgegenhaltungen :
DE-C-  739 542
GB-A- 1 129 709
US-A- 1 831 071
US-A- 3 493 068

(73) Patentinhaber : STILL GMBH
Berzeliusstrasse 10
D-2000 Hamburg 74 (DE)

(72) Erfinder : Kröhling, Erich, Ing. grad.
Schaumannskamp 69
D-2057 Reinbek (DE)

(74) Vertreter : Schaefer, Gerhard, Dr.
Linde Aktiengesellschaft Zentrale Patentabteilung
D-8023 Höllriegelskreuth (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Nutzlastfahrzeug mit mindestens einem elektrischen Fahrmotor, das ein Fahrerhaus, eine hinter dem Fahrerhaus angeordnete Ladeplattform und mindestens eine unterhalb der Ladeplattform 7 angeordnete Achse aufweist, bei dem eine elektrische Batterie, die unterhalb der Ladeplattform zwischen den Achsen angeordnet ist, und ein aus einer Brennkraftmaschine und einem Generator bestehendes Stromerzeugeraggregat eingebaut sind, wobei die Kurbelwelle der Brennkraftmaschine und die Welle des Generators senkrecht zur Fahrzeuglängsmittelebene angeordnet sind.

Ein Nutzlastfahrzeug dieser Art ist z. B. durch das Dokument GB-A-1 129 709 bekannt.

Bei diesem bekannten Nutzlastfahrzeug sind zwei Batterien jeweils vor einem Rad unterhalb der Ladeplattform angeordnet. Ebenfalls unterhalb der Ladeplattform hinter der Hinterachse ist ein Aggregat aus einer Kolben-Brennkraftmaschine und einem Generator angeordnet, welches an die Batterie anschließbar ist, so daß dann, wenn die Batterie weitgehend erschöpft ist, die Batterie über dieses aus Kolben-Brennkraftmaschine und Generator bestehende Aggregat wieder aufgeladen werden kann. Zusätzlich ist vorgesehen, daß die Batterie über einen Netzanschluß und ein Ladegerät aufgeladen werden kann. Vorzugsweise ist vorgesehen, daß die Kolben-Brennkraftmaschine den Generator mit konstanter Drehzahl antreibt. Bei diesem bekannten Fahrzeug ist nicht vorgesehen, den Fahrmotor unmittelbar an den Generator des aus Kolben-Brennkraftmaschine und Generator bestehenden Aggregates anzuschließen. Da das aus Kolben-Brennkraftmaschine und Generator bestehende Aggregat nur zum Aufladen der Batterie dient, kann es relativ klein sein, so daß der Raum hinter der Hinterachse unterhalb der Ladeplattform für dieses Aggregat ausreicht).

Weiterhin ist ein Nutzlastfahrzeug bekannt, dessen angetriebene Räder über einen Elektromotor angetrieben werden, wobei in einen an diesem Fahrzeug vorgesehenen Kasten entweder eine Batterie oder ein aus einer Kolben-Brennkraftmaschine und einem Generator bestehendes Aggregat eingebaut werden können, wobei im Falle, daß die Batterie eingebaut ist, diese mit dem Fahrmotor verbindbar ist oder, im Falle, daß das aus Kolben-Brennkraftmaschine und Generator bestehende Aggregat eingebaut ist, dieses mit dem Fahrmotor verbindbar ist (DE-C-739 542). Da bei diesem Fahrzeug nur entweder die Batterie oder das aus Kolben-Brennkraftmaschine und Generator bestehende Aggregat vorhanden ist, stellt sich bei diesem Fahrzeug nicht das Problem, sowohl die Batterie, als auch das aus Kolben-Brennkraftmaschine und Generator bestehende Aggregat gleichzeitig in einer zweckmäßigen räumlichen Anordnung am Fahrzeug unterzubringen.

Weiterhin ist ein Personenkraftwagen mit batterie-elektrischem Antrieb bekannt, bei dem das Gehäuse der Eisen-Nickel-Batterie gleichzeitig als Fahrzeugrahmen ausgestaltet ist. Innerhalb dieses Rahmens ist zusätzlich in dem Raum, in dem üblicherweise bei Personenkraftwagen die Kolben-Brennkraftmaschine vorgesehen ist, ein aus einer Kolben-Brennkraftmaschine und einem Generator bestehendes Aggregat angeordnet (US-A-3 493 068). Dieses Anordnungsprinzip ist bei Nutzlastfahrzeugen nicht anwendbar. In der heutigen Zeit besteht oft die Aufgabe, mit Nutzlastfahrzeugen einerseits in bestimmten Betriebsphasen in geschlossenen Räumen oder sonstigen Räumen, in denen beispielsweise wegen Explosionsgefahr keine Abgase zulässig sind, zu fahren und in anderen Betriebsphasen im Freien oder sonstigen Räumen zu fahren, in denen Abgase zulässig sind, wobei so große Strecken mit so großer Geschwindigkeit oder so großer Zuglast zurückgelegt werden sollen, daß ein Fahren dieser Strecken mit Batteriestrom mit Rücksicht auf die Ladungskapazität einer Batterie und deren nur beschränkte Wiederaufladbarkeit unwirtschaftlich wäre.

Der Erfindung liegt die Aufgabe zugrunde, ein Nutzlastfahrzeug gemäß Oberbegriff des Patentanspruches 1 zu schaffen, dessen elektrischer Fahrmotor ohne Umbau oder Umrüstung des Fahrzeuges wahlweise entweder mit Batteriestrom oder mit dem in einem Generator erzeugten Strom gespeist werden kann und bei dem sowohl der Batteriewechsel als auch die Wartung des aus Brennkraftmaschine und Generator bestehenden Aggregates leicht möglich sind.

Zur Lösung dieser Aufgabe ist vorgesehen, daß das aus Kolben-Brennkraftmaschine und Generator bestehende Stromerzeugeraggregat unmittelbar hinter dem Fahrerhaus über der Batterie oberhalb der Ladeplattform angeordnet ist, wobei wahlweise entweder die Batterie oder der Generator des Stromerzeugeraggregates an den Fahrmotor anschließbar ist.

Zweckmäßigerweise kann die Batterie zur Seite herausziehbar angeordnet sein. Weiterhin ist es zweckmäßig, wenn hinter dem aus Brennkraftmaschine und Generator bestehenden Aggregat noch ein Teil der Ladeplattform zur Aufnahme von Nutzlast oder für Ballastgewichte zum Belasten der Treibachse zum Ziehen großer Zuglasten zur Verfügung steht.

Bei der Anordnung gemäß der Erfindung ist nicht nur die Zugänglichkeit der Brennkraftmaschine und der Verschleißteile des Generators gut, sondern es ist auch eine gute Belüftung des Raumes, in dem sich das Stromerzeugeraggregat befindet, möglich ohne die Gefahr, daß Wärme unnötig zur Batterie hingeführt wird.

In der Zeichnung ist ein Ausführungsbeispiel eines Fahrzeugs gemäß der Erfindung dargestellt.

Figur 1 zeigt eine Seitenansicht des Fahrzeuges.

Figur 2 zeigt eine Draufsicht bei abgenommener Motorhaube.

Das Fahrzeug weist zwei lenkbare Vorderräder 1 auf und zwei Hinterräder 2, die über einen in der Zeichnung nicht mehr dargestellten Gleichstromelektromotor angetrieben werden.

Die Räder 1 und 2 des Fahrzeuges sind an einem Fahrzeugrahmen 3 in nicht näher dargestellter Weise aufgehängt. Der vordere Teil 4 des Fahrzeugrahmens ist abgekröpft. Auf dem Vorderteil des Fahrzeugrahmens ist ein Fahrerhaus 5 angeordnet, in dem ein Lenkrad 6 zum Lenken der Räder 1 vorgesehen ist.

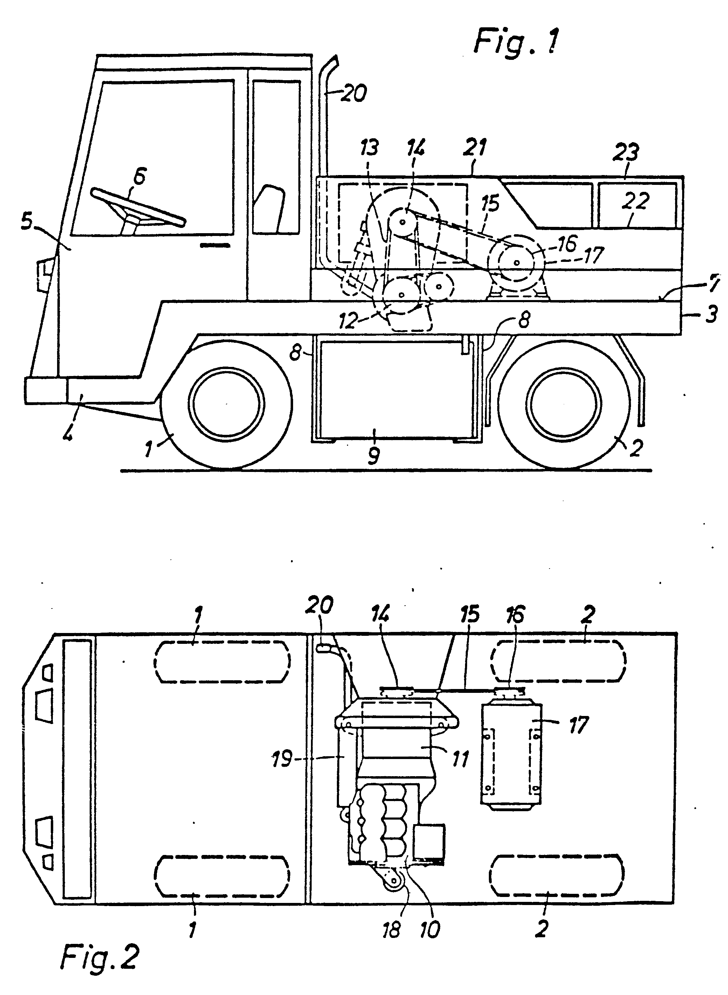

In dem oberhalb der den Rädern 2 zugeordneten Hinterachse liegenden Bereich ist im Rahmen 3 eine Ladeplattform angeordnet, deren obere Ebene mit 7 bezeichnet ist. Nach unten sind an dem Rahmen 3 zwei Tragwände 8 befestigt, in denen eine Batterie 9 derart gelagert ist, daß sie zum Wechseln oder Warten nach der Seite des Fahrzeuges, das heißt senkrecht zur Zeichenebene der Figur 1, herausgezogen werden kann. Oberhalb der Batterie 9 ist eine Brennkraftmaschine 10 derart angeordnet, daß die Kurbelwelle 10 parallel zu den Achsen der Räder 2 und der Räder 1 in deren Geradeausfahrtlage liegt, das heißt senkrecht zur Fahrzeuglängsmittelebene. Unmittelbar an die Kurbelwelle der Brennkraftmaschine 10 ist ein Generator 11 gekoppelt, der für die Beaufschlagung des mit den Treibrädern 2 gekoppelten Fahrmotors bzw. der mit den Treibrädern 2 gekoppelten Fahrmotoren vorgesehen ist. Auf der Welle des Generators 11 ist eine Riemenscheibe 12 angeordnet, von der aus ein Keilriemen 13 zu einer Doppelkeilriemenscheibe 14 auf der Welle einer Lichtmaschine führt, die eine in der Zeichnung nicht mehr dargestellte Starter- und Beleuchtungsbatterie speist. Von der Riemenscheibe 14 führt ein weiterer Keilriemen 15 zu der Keilriemenscheibe 16 eines zweiten Generators 17, der selbsttätig auf eine unabhängig von der Drehzahl der Brennkraftmaschine 10 konstante Spannung geregelt ist und bei Betrieb der Brennkraftmaschine 10 die Batterie 9 auflädt. Das aus Brennkraftmaschine 10 und Generator 11 bestehende Aggregat ist auf elastischen Lagerungen 18 gelagert. Die Abgase der Brennkraftmaschine 10 werden über einen Abgasschalldämpfer 19 durch ein Abgasrohr 20 abgeleitet. Über das aus Brennkraftmaschine 10, Generator 11 und Generator 17 gebildete Aggregat ist eine Haube 21 gesetzt, die in ihrem hinteren Teil eine Ablagefläche 22 aufweist, die durch einen Rahmen 23 umgeben ist.

## Patentansprüche

1. Nutzlastfahrzeug mit mindestens einem elektrischen Fahrmotor, das ein Fahrerhaus (5), eine hinter dem Fahrerhaus (5) angeordnete Ladeplattform (7), eine unterhalb der Ladeplattform (7) angeordnete Achse und insgesamt zwei unterhalb der Ladeplattformebene angeordnete Achsen aufweist, bei dem eine elektrische Batterie (9) die unterhalb der Ladeplattform (7) zwischen den Achsen angeordnet ist, und ein aus einer Brennkraftmaschine (10) und einem Generator (11) bestehendes Stromerzeugeraggregat eingebaut ist, wobei die Kurbelwelle der Brennkraftmaschine (10) und die Welle des Generators (11) senkrecht zur Fahrzeuglängsmittelebene angeordnet sind, dadurch gekennzeichnet, daß das Stromerzeugeraggregat (10, 11) unmittelbar hinter dem Fahrerhaus (5) über der Batterie (9) oberhalb der Ladeplattform (7) angeordnet ist, wobei wahlweise entweder die Batterie (9) oder der Generator (11) des Stromerzeugeraggregates (10, 11) an den Fahrmotor anschließbar ist.

2. Nutzlastfahrzeug nach Anspruch 1, dadurch gekennzeichnet, daß zwei Generatoren (11 und 17), von denen der eine zur Beaufschlagung des Fahrmotors bzw. der Fahrmotoren vorgesehen ist und der andere auf unabhängig von der Drehzahl konstant gehaltene Spannung geregelt und zur Ladung der Batterie (9) vorgesehen ist, angeordnet sind, wobei die Achsen beider Generatoren (11 und 17) parallel zueinander angeordnet sind.

3. Nutzlastfahrzeug nach Anspruch 2, dadurch gekennzeichnet, daß einer (11) der Generatoren (11 und 17), vorzugsweise der den Fahrmotor bzw. die Fahrmotoren beaufschlagende Generator (11) koaxial zur Brennkraftmaschine (10) angeordnet ist und der andere Generator, vorzugsweise der zum Zwecke der Batterieladung dienende Generator (17), neben der Brennkraftmaschine (10) angeordnet ist.

## Claims

1. A commercial vehicle having at least one electric traction motor, which is provided with a driver's cabin (5), a loading platform (7) positioned behind the driver's cabin (5), one axle positioned below the loading platform (7) and a total of two axles positioned below the plane of the loading platform, wherein an electric battery (9) is positioned beneath the loading platform (7) between the axles, and a generator set, consisting of an internal-combustion engine (10) and a generator (11), is installed, the crankshaft of the internal-combustion engine (10) and the shaft of the generator (11) being positioned at right-angles to the longitudinal median plane of the vehicle, characterised in that the generator set (10, 11) is positioned directly behind the driver's cabin (5) over the battery (9) above the loading platform (7), whereby either the battery (9) or the generator (11) of the generator set, can selectively be connected to the traction motor.

2. A commercial vehicle as claimed in Claim 1, characterised in that two generators (11 and 17) are provided, one of which is intended to act on the traction motor or motors, and the other is adjusted to constant voltage, independent of the rotational speed, and is intended for charging the battery (9), the axes of both generators (11 and 17) being arranged parallel to each other.

3. A commercial vehicle as claimed in Claim 2, characterised in that one (11) of the generators (11 and 17), preferably the generator (11) which acts on the traction motor or motors, is arranged to be co-axial with the internal-combustion engine (10) and the other generator, preferably the generator (17) used for charging the battery, is positioned next to the internal-combustion engine.

## Revendications

1. Véhicule utilitaire comportant au moins un moteur propulseur électrique, et qui présente une cabine de conducteur (5), une plate-forme de chargement (7) disposée derrière la cabine de conducteur et au moins un essieu disposé au-dessous de la plate-forme de chargement (7), deux essieux étant prévus au-dessous de ladite plate-forme de chargement (7), cependant qu'une batterie électrique (9) placée au-dessous de la plate-forme de chargement (7) entre les essieux ainsi qu'un groupe générateur de courant formé d'un moteur à combustion (10) et d'un générateur (11) sont également prévus, le vilebrequin du moteur à combustion (10) et l'arbre du générateur (11) étant perpendiculaires au plan médian longitudinal du véhicule, caractérisé en ce que le groupe générateur de courant électrique (10, 11) est disposé immédiatement derrière la cabine de conducteur (5) au-dessus de la batterie (9) et au-dessus de la plate-forme de chargement (7), ladite batterie (9) ou ledit générateur (11) du groupe générateur de courant (10, 11) pouvant être reliés sélectivement au moteur propulseur.

2. Véhicule utilitaire selon la revendication 1, caractérisé en ce qu'il comporte deux générateurs (11 et 17) dont l'un est appelé à alimenter le(s) moteur(s) propulseur(s), et dont l'autre est réglé à une tension maintenue constante indépendamment de la vitesse de rotation, ledit autre générateur étant appelé à charger la batterie (9), les axes des deux générateurs (11 et 17) étant parallèles l'un à l'autre.

3. Véhicule utilitaire selon la revendication 2, caractérisé en ce que l'un (11) des générateurs (11 et 17), de préférence le générateur (11) destiné à alimenter le(s) moteur(s) propulseur(s), est disposé coaxialement au moteur à combustion (10), cependant que l'autre générateur (17), de préférence le générateur (17) destiné à charger la batterie, est disposé à côté dudit moteur à combustion (10).

Fig. 1

Fig.2

1